(19) Europäisches Patentamt

European Patent Office

Office européen des brevets

(11) **EP 0 733 298 B1**

(12) **EUROPEAN PATENT SPECIFICATION**

(45) Date of publication and mention
of the grant of the patent:
**03.05.2000 Bulletin 2000/18**

(21) Application number: **94930310.1**

(22) Date of filing: **24.10.1994**

(51) Int. Cl.[7]: **H04Q 11/00**

(86) International application number:
**PCT/GB94/02330**

(87) International publication number:
**WO 95/13687 (18.05.1995 Gazette 1995/21)**

(54) **A CROSS-CONNECT FOR AN OPTICAL NETWORK**

QUERVERBINDUNGSSYSTEM FÜR EIN OPTISCHES NETZWERK

SYSTEME D'INTERCONNEXION POUR RESEAU OPTIQUE

(84) Designated Contracting States:
**BE CH DE DK ES FR GB IT LI NL SE**

(30) Priority: **08.11.1993 EP 93308884**
**29.03.1994 GB 9406208**

(43) Date of publication of application:
**25.09.1996 Bulletin 1996/39**

(73) Proprietor:
**BRITISH TELECOMMUNICATIONS public limited company**
**London EC1A 7AJ (GB)**

(72) Inventor: **MCGUIRE, Alan**
**Suffolk IP13 0DR (GB)**

(74) Representative:
**Roberts, Simon Christopher et al**
**BT Group Legal Services,**
**Intellectual Property Department,**
**8th Floor, Holborn Centre**
**120 Holborn**
**London, EC1N 2TE (GB)**

(56) References cited:
EP-A- 0 382 431          EP-A- 0 429 046
EP-A- 0 461 519          EP-A- 0 494 831
EP-A- 0 548 453

- **PROCEEDINGS OF THE SPIE, 1992 TOPICAL MEETING ON PHOTONIC SWITCHING, 1-3 JULY 1992, VOL. 1807 PAGES 462-469, MINSK BELARUS H.H. WITTE 'Novel Photonic Switching Network Using Optical Frequency Division Shared-Medium Switching'**
- **TRANSACTIONS OF THE INSTITUTE OF ELECTRONICS AND COMMUNICATION ENGINEERS OF JAPAN, SECTION E, vol.E75-B, no.4, April 1992, TOKYO JP pages 267 - 273, XP301364 H. ROKUGAWA ET AL 'Wavelength Conversion Laser Diodes Application to Wavelength-Division Photonic Cross-Connect Node with Multistage Configuration'**
- **CONFERENCE RECORD, IEEE GLOBAL TELECOMMUNICATIONS CONFERENCE, 6-9 DEC. 1992, VOL.3 PAGES 1902-1905, ORLANDO US, XP392891 J. SHARONY ET AL 'Extension of Classical Rearrangeable and Non-Blocking Networks to the Wavelength Dimension'**
- **PROCEEDINGS OF THE FOURTH TIRRENIA INTERNATIONAL WORKSHOP ON DIGITAL COMMUNICATIONS, 19-23 SEPT. 1989, PAGES 238-248, TIRRENIA IT, XP163999 D.W. SMITH 'Combined Spectral & Spatial Multiplexing Schemes for Switching Networks'**
- **ELECTRONICS LETTERS, vol.28, no.13, 18 June 1992, STEVENAGE GB pages 1268 - 1270, XP301528 H. OBARA ET AL 'Star Coupler Based WDM Switch Employing Tunable Devices with Reduced Tunability Range'**

## Description

This invention relates to a cross-connect for an optical network.

In order to cope with the increasing demand for subscriber services on telecommunication networks, digital optical transmission networks are being introduced in which local access networks, which typically route electrical signals, are interconnected by a fibre optic network. This has been facilitated by the introduction of the Synchronous Digital Hierarchy (SDH) standard that deals with the formatting of signals in Synchronous Transfer Modules (STM) which will allow a unified telecommunication infrastructure and provides improved flexibility by permitting electrical digital signals from the local access networks to be converted into optical signals and transmitted through the optical network.

In order to upgrade the capacity of the optical network, Wavelength-Division-Multiplexing (WDM) techniques have been proposed, which permit the transmission capacity of a fibre link to be upgraded to the multi-Gbit/s range.

Thus, it has been proposed to provide a multi-Gbit/s WDM network superimposed on the top level of a SDH network. For a fuller discussion, reference is directed to I. Hawker, "Evolution of Digital Optical Transmission Networks", BT Technol. J., Vol. 9, No. 4, October 1991, pp 43-56. It is proposed to include nodes in the WDM network to allow dynamic re-routing of WDM data streams. It is proposed that each node should include access ports to allow optical streams to be dropped to and added from lower levels of the network. It has been proposed that routing of the high bit rate streams is directly performed in the optical layer whereas processing of any of the streams is achieved in the electronic domain by dropping it to a lower layer of the network. Network management and administration is proposed to be achieved from a management unit which configures an optical cross-connect at each node according to traffic requirements. Thus, optical cross-connects (OXC's) constitute the routing nodes of the WDM transport network.

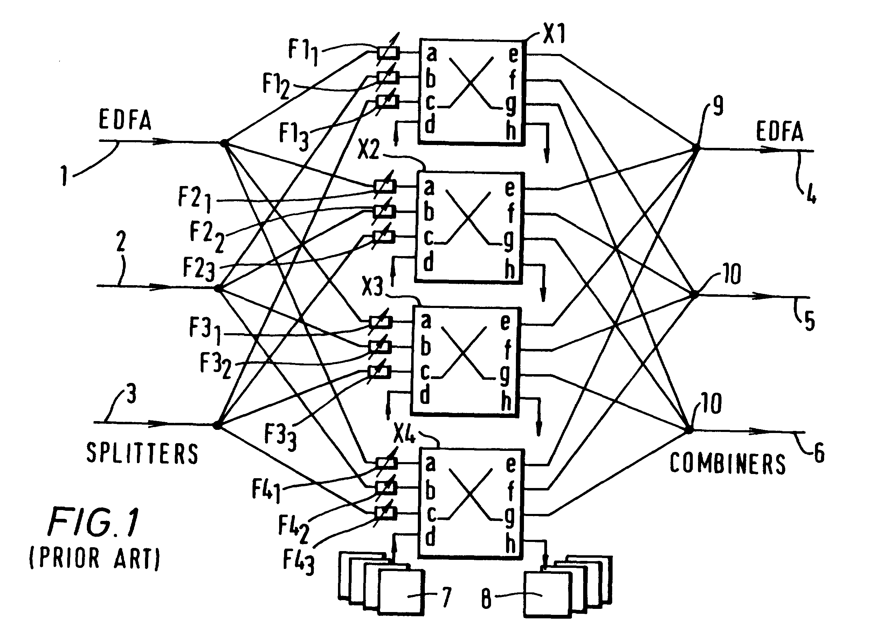

A number of prior proposals have been made for the node architecture of the OXC and an example is given in Figure 1.

Three input fibres 1, 2, 3 are connected at the node to output fibres 4, 5, 6. Each of the fibres 1-3 carries four WDM wavelength channels, which are connected to the output fibres 4-6 by means of space switches $X_1$-$X_4$. In this example, the space switches are 4X4 matrices which thus have four inputs a-d and four outputs e-h that are optically interconnectable and are controlled by applied electrical signals (not shown). Such space switches are well known and include electrically controllable elements of variable refractive index to produce selective switching between the inputs and outputs.

The four optical channels of each input fibre 1-3 are applied to an input of each of the space switches $X_1$-$X_4$ and each is separately selected by means of a respective tunable filter $F1_1$, $F2_1$, $F3_1$, $F4_1$. Similarly, the various wavelength channels from fibres 2 and 3 are applied to respective inputs of the space switches through filters $F1_2$-$F4_2$, $F1_3$-$F4_3$. The fourth input of each space switch $X_1$-$X_4$ is connected to tunable optical transmitter units 7 which produce optical signals of a single frequency in response to digital electrical signal streams from the lower electrical layer of the network, to allow electrical signals to be added into the optical network for transmission in the optical layer. The electrical signals may be SDH, PDH, ATM, X25 or any other suitable format, since the optical network can transmit the bit stream transparently in the optical domain. Similarly, the outputs h of each of the space switches $X_1$-$X_4$ are connected to receiver units 8 that include photodetectors for producing electrical signals, so that digital data streams can be dropped out of the optical network into the lower, electrical layer. The outputs e-g of the space switches $X_1$-$X_4$ are respectively connected to the inputs to the fibres 4, 5 and 6 by means of combiners 9, 10, 11. Thus, by applying control signals to the space switches $X_1$-$X_4$, traffic in the WDM channels of input fibres 1-3 can be switched selectively between output fibres 4-6 and signal trains can be added to and dropped out of the optical network by means of the transmitters and receivers 7, 8. This arrangement however suffers from a number of disadvantages.

Firstly, the ultimate size of the OXC is limited by the size of the space switches. Currently, these are made in LiNbO$_3$ or InP and are limited for practical purposes to 8X8. Also, for polarisation independent operation they typically require high switching voltages of the order of +/- 100 V and have long rise times > 100 ns. Furthermore, the devices are not at present hermetically sealed, and the material thereof tends to exhibit drift characteristics, so as to alter the performance with time.

Secondly, a node configuration as shown in Figure 1 produces a loss of approximately 30 dB and the main contributor to the loss is the switch array. In order to overcome this problem, optical fibre amplifiers such as erbium doped fibre amplifiers need to be used to provide amplification.

Thirdly, the node architecture exhibits blocking characteristics. It is not possible for the same wavelength channel from two of the input fibres to leave on the same output fibre.

Another known switching arrangement is disclosed in EP-A-0 548 453. This describes a cross-connect having a plurality of switching mechanisms forming the coupling means for coupling a plurality of inputs and a plurality of outputs, whereby every signal applied to an input can be optionally switched to each output.

The disclosed cross-connect includes signal splitters at the inputs for deriving individual signals at given frequencies from a group of input signals and signal combiners at the outputs for recombining signals at different frequencies from the plurality of coupling means.

The non-modular topology of the disclosed cross-connect is such that, if it were desired to upgrade the line capacity of the cross-connect, all the splitters and combiners would need to be replaced and extra couplers would need to be included.

The present invention provides an improved cross-connect, suitable for an optical network, which may overcome at least some of these problems. In accordance with the invention there is provided an optical cross-connect comprising a plurality of input means each for receiving a respective group of input signals and deriving in response to each signal of the group an individual optical signal of a respective given wavelength, a plurality of output means each including a plurality of receptors selectively responsive to respective ones of the wavelengths of said optical signals to provide an output signal for the output means, and a plurality of coupling means each for coupling a respective one of said optical signals, each of a different wavelength, from each of the input means, to a receptor of each of the output means characterised in that the input means are arranged in a plurality of modules each for receiving a group (k) of said input signals, said output means are arranged in a plurality of modules, and said modules are selectively connectible to the coupling means.

In accordance with the invention, it is possible to route signals of the same wavelength from different input means to a particular one of the output means. Furthermore, the losses involved may be substantially reduced.

In one form, the plurality of coupling means comprises a plurality of star couplers, and in another form comprises a plurality of optical bus lines to which the input and output means may be selectively added and removed as modules.

The input signals may be electrical or optical and the plurality of input means may be configured to process optical and electrical signals, to allow electrical signals to be added into the optical signal traffic. Similarly, at least one of the output means may produce electrical output signals to allow optical signals to be dropped to an electrical network.

Furthermore, an improved non-blocking arrangement may be provided, in which a plurality of the input means are each operative to receive a respective group (k) of input signals and derive in response to each signal of the group an individual optical signal of a respective given wavelength, the individual output signals being provided on selected ones of a plurality of output channels greater than k, a plurality of the output means each including a plurality of receptors greater in number than k, are selectively responsive to respective ones of the wavelengths of said optical signals to provide an output signal for the output means, and a plurality of the coupling means greater in number than k, are each operative to couple a respective one of said optical signals, each of a different wavelength, from each of the input means, to a respective receptor of each of the output means.

In order that the invention may be more fully understood an embodiment thereof will now be described by way of example, reference being had to the accompanying drawings in which:

Figure 1 is a schematic block diagram of a prior OXC, described hereinbefore;
Figure 2 is a schematic block diagram of an optical cross-connect in accordance with the invention;
Figure 3 illustrates schematically input and output modules of the cross-connect shown in Figure 2;
Figure 4 illustrates signal blocking in the arrangement of Figures 2 and 3;
Figure 5 is a schematic block diagram of the cross-connect with an alternative form of input module which avoids signal blocking;
Figure 6 is a schematic block diagram of an alternative form of cross-connect in accordance with the invention, which utilises a back plane bus;
Figure 7 illustrates a further optical cross-connect in accordance with the invention; and
Figure 8 illustrates schematically input and output modules of the cross-connect shown in Figure 7.

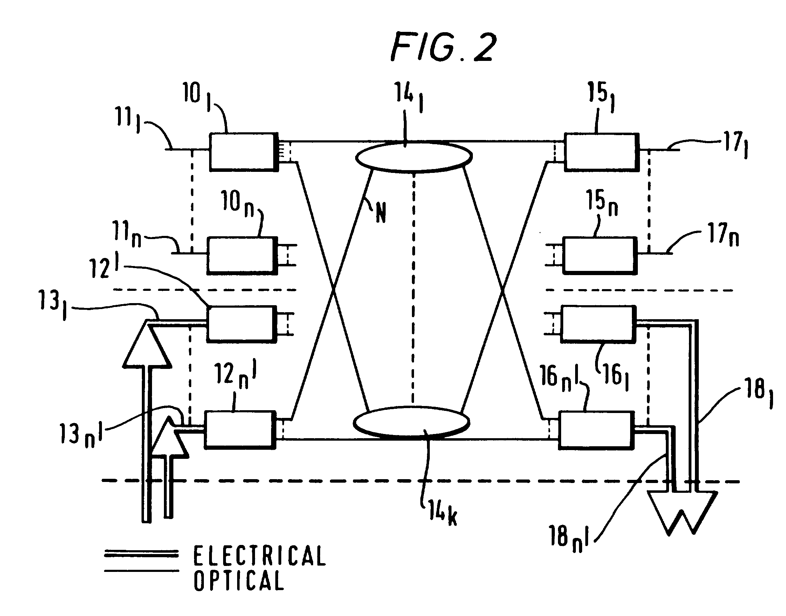

Referring to Figure 2, the OXC in accordance with the invention is configured for use at a node in a WDM hierarchical telecommunication system that includes an optical layer overlying various electronic layers.

The OXC includes a number of input means in the form of input modules $10_1$-$10_n$ to which optical fibres $11_1$-$11_n$ are connected, the optical fibres carrying k channel WDM signals. The OXC also receives inputs from the electronic layer that are applied to input modules $12_1$-$12_n'$. Each input module 12 receives k electrical lines 13 carrying electrical input digital signals.

As will be explained in more detail hereinafter, signals corresponding to the k channels of each electrical and optical input, are connected by means of k star couplers $14_1$-$14_k$ to a plurality of output means in the form of optical output modules $15_1$-$15_n$ and electronic output modules $16_1$-$16_n'$. The output modules $15_1$-$15_n$ provide k channel WDM optical signals on output fibres $17_1$-$17_n$. The output modules 16 provide electrical outputs that can be dropped down to the electronic layer of the network on lines $18_1$-$18_n'$.

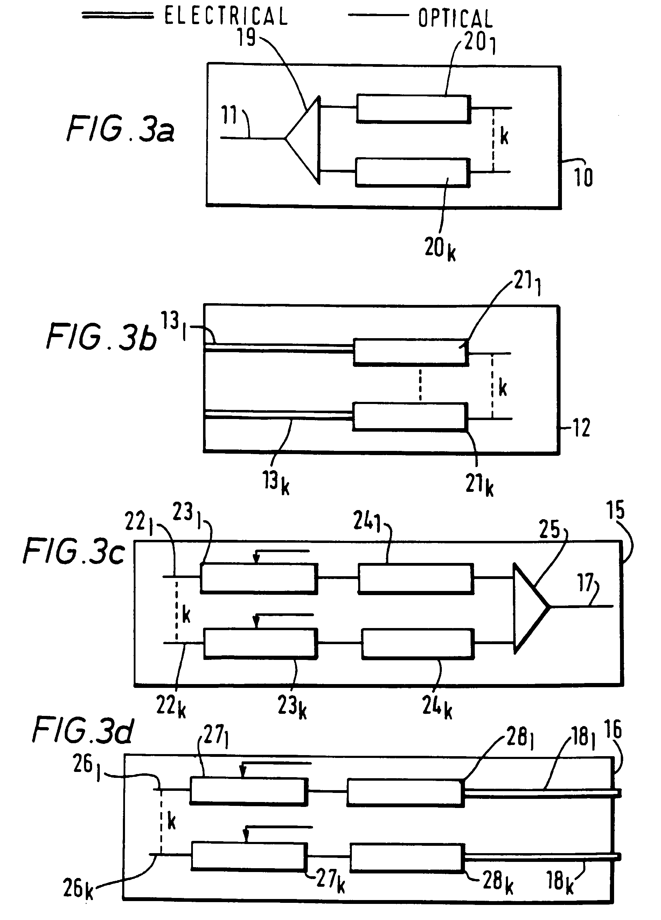

The structure of a first example of input module 10 is shown in Figure 3A and consists of a demultiplexer 19 which demultiplexes k channel WDM signals on input fibre 11 onto k parallel channels, each of which includes a wavelength converter $20_1$-$20_k$. The wavelength converters each produce a respective different wavelength in response to the input signal applied thereto so that the device shown in Figure 3A provides one of N different output wavelengths to be coupled to the star couplers 14 as will be described hereinafter, where N corresponds to the total number of input or output modules (n+n'). The wavelength converters may comprise all-optical devices or may include an opto-electrical detector that drives a tunable laser. Examples of specific wavelength converters currently available are listed in "Photonic terabit/s networks and their key components" H.R. van As, IBM Research Div (Rüschlikon) 11th Annual Conference on European Fibre Optic Communications and Networks (EFOC & N '93) June 30 - July 1993 pp 13-20, and in particular on page 18.

The structure of each input module 12 for electrical signals is shown in more detail in Figure 3B. Each input module 12 receives k parallel electrical lines $13_1$-$13_k$ that are connected to respective lasers that are tunable over the N different output wavelengths. Thus the lasers, which are typically laser diodes, produce output modulated signals at k different wavelengths, for the k input electrical signal channels. Specific examples of commercially available tunable lasers suitable for the system are listed on page 17 of the EFOC & N '93 paper, supra.

Referring to Figure 1, the star couplers $14_1$-$14_k$ each include N optical inputs and N optical outputs. The N inputs of each star coupler 14 are connected to receive individual different frequency outputs from each of the input modules. Thus, referring to Figure 2, star coupler $14_1$ has inputs connected to receive a respective different wavelength signal train from each of the input modules $10_1$-$10_n$ and $12_1$-$12_n'$. In order to simplify the drawing, only the connections from input module $10_1$ and $12_n'$ are shown. Similarly, for the star coupler $14_k$, connections from input module $10_1$ and $12_n'$ are shown with the other connections being omitted to simplify the drawing. The connections to star couplers $14_2$-$14_{k-1}$ have also been omitted for simplicity. For each of the star couplers 14, the inputs are so arranged that each receives an individual wavelength from the groups of different wavelengths produced by each of the input modules 10 and 12.

Each star coupler 14 operates in a manner well known per se so as to mix all the input signal trains and feed them to all of its outputs. Thus, considering for example star coupler $14_1$, a mixture of all of its inputs is applied to N outputs, namely to each of the output modules $15_1$-$15_n$, $16_1$-$16_n'$.

The nature of each of the output modules will now be described with reference to Figure 3. Referring to Figure 3C, the structure of each optical output module 15 is shown. The module consists of k inputs $22_1$-$22_k$ which are individually connected to one output of each of the star couplers $14_1$-$14_k$. Each input 22 is connected to a receptor in the form of a tunable filter $23_1$-$23_k$ which is individually tunable in order to select individual wavelengths from the mixture of signals applied to each input 22. Commercially available tunable filters are described in detail on page 17 of the EFOC & N '93 paper, supra, and may comprise electro-mechanically tuned filters (e.g. Fabry-Perot etalon), acousto-optical or semiconductor filters.

It will be recalled that each star coupler, connected to a corresponding one of the inputs 22, supplies a mixture of signals of different wavelengths selected from one of the outputs of each of the input modules 10, 12. Thus, each tunable filter $23_1$-$23_k$ can be used to select an individual signal from one of the input modules on the basis of a wavelength selection. The tunable filters may be tuned individually by the application of an external control voltage from a control system (not shown). The output of each filter $23_1$-$23_k$ is applied to a corresponding wavelength converter $24_1$-$24_k$. The wavelength converters produce signals that are combined by means of a passive combiner 25 to produce a k channel WDM signal on output fibre 17.

Thus, by suitable selection of the pass frequencies of the filters 23, selection of individual signals can be achieved for each output fibre 17 so that a selective cross-connection can be achieved between the input fibres 11 and output fibres 17. Moreover, electrical signals applied to input modules 12 can be added into the k channel WDM signals produced at output fibres 17, thus lifting the electrical signal from the electronic layer of the network to the optical layer.

Figure 3D shows a structure for each electrical module 16, which allows optical signal trains to drop down from the optical layer to the electrical layer of the network. Each output module 16 consists of k input lines $26_1$-$26_k$ which are applied to tunable filters $27_1$-$27_k$ that function in a similar manner to the tunable filters 23 so as to select individual signal wavelengths. The outputs of the tunable filters 27 are applied to corresponding receivers $28_1$-$28_k$, typically in the form of photodiodes, which produce electrical signals corresponding to the signals of selected wavelength. The resulting k digital signal trains are applied to k output lines, which make up each output 18. Thus, signals of particular wavelengths are selected by the tunable filters 27 and are dropped down to electrical signals for use in the electronic layer of the network.

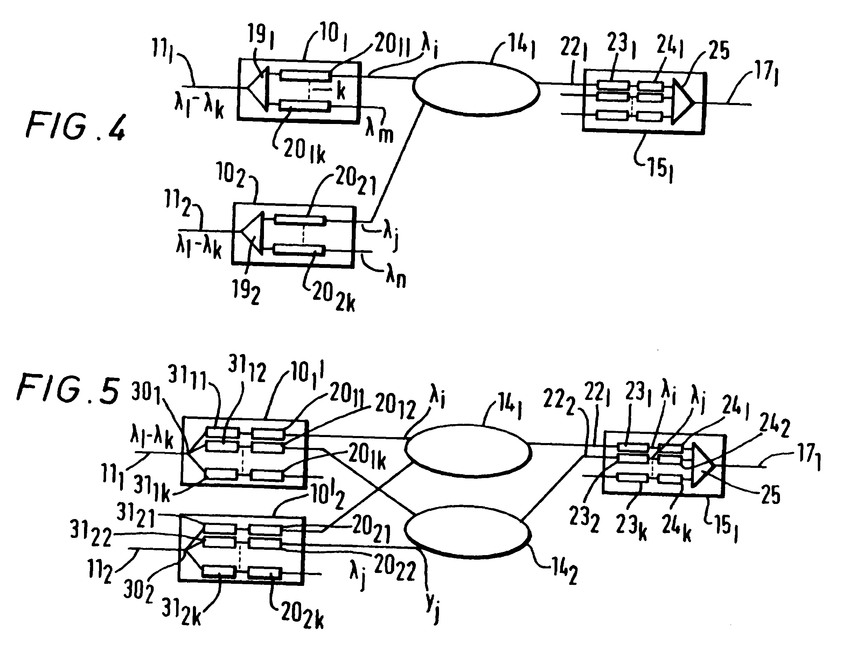

A problem with the configuration described so far is that signal blocking can occur at some of the outputs 17. This can be understood from Figure 4 which is an enlarged, partial illustration of the configuration of Figure 2, Figure 3A and Figure 3B, showing input modules $10_1$, $10_2$, star coupler $14_1$ and output module $15_1$, the other components having been omitted to simplify the drawing.

Referring to input module $10_1$, the input WDM signal is demultiplexed by demultiplexer $19_1$ to provide k signals of wavelength $\lambda_1$-$\lambda_k$ which are applied to respective wavelength converters $20_{11}$-$20_{1k}$. The wavelength converters produce respective outputs $\lambda_i$-$\lambda_m$.

A similar set of signals is produced by input module $10_2$, comprising wavelengths $\lambda_j$-$\lambda_n$ as shown in Figure 4. Each of the other input modules (not shown) produce similar outputs.

Considering now the star coupler $14_1$, each of its N inputs receives a signal from the first wavelength converter $20_{11}$-$20_{21}$, etc. and the arrangement is set up so that each of the input wavelengths is different. Thus N separate wavelengths are applied to the star coupler. Accordingly, referring to Figure 4, $\lambda_i \neq \lambda_j$. As previously explained, the resulting mix of signals produced by star coupler $14_1$ is applied to a single input of each of the output modules $15_1$-$15_n$, $16_1$-$16_n'$. Thus, considering the output module $15_1$ as shown in Figure 4, it is not possible to select wavelength $\lambda_i$ and $\lambda_j$ from the input modules $10_1$, $10_2$ simultaneously at the output module $15_1$ since both of the signals are applied simultaneously to one of the filters 23. In Figure 4 this is shown as input filter $23_1$. The filter $23_1$ can select only one of the wavelengths $\lambda_i$, $\lambda_j$ and therefore, signal blocking of one of the wavelengths will occur.

This problem is overcome by the configuration shown in Figure 5, in which a different form of the input module 10' is provided. Referring to input module $10'_1$ the input WDM signals applied on input fibre $11_1$ are fed to a beam splitter $30_1$ that provides k parallel channel outputs each of which is fed to a tunable filter $31_{11}$-$31_{1k}$ that in turn are connected to individual wavelength converters $20_{11}$-$20_{1k}$. Thus, by tuning the individual filters $31_{11}$-$31_{1k}$, the different input signals $\lambda_1$-$\lambda_k$ can be applied to different ones of the k channels selectively. The wavelength converters $20_{11}$-$20_{1k}$ then produce appropriate signals for the inputs of the star couplers 14. In Figure 5, the first two star couplers $14_1$, $14_2$ are shown. When it is desired to assemble a signal at output module $15_1$ that contains wavelength $\lambda_i$ from input module $10'_1$ and $\lambda_j$ from input module $10'_2$, if, as previously described with reference to Figure 4, these signals were applied to the inputs of a single one of the star couplers, blocking would occur. However, as shown in Figure 5, the tunable filter $31_{22}$ is adjusted such that wavelength converter $20_{22}$ (rather than converter $20_{21}$) produces the output wavelength $\lambda_j$. Consequently, the signal of wavelength $\lambda_j$ is applied to star couplers $14_2$ and hence to the second input of the output module $15_1$. Thus, the signals of wavelength $\lambda_i$ and $\lambda_j$ can be selected by the tunable filters $23_1$ and $23_2$ respectively in the output module $15_1$. In this way, signal blocking is avoided.

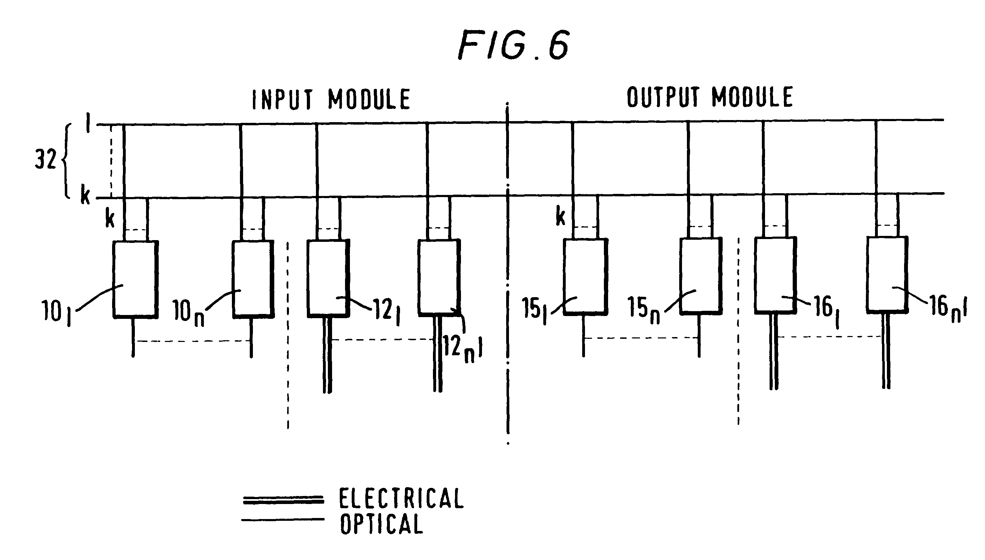

Referring to Figure 6, this shows an alternative configuration in which the star couplers of Figure 2 are replaced by a back plane bus. Thus, the individual input modules $10_1$-$10_n$, $12_1$-$12_n$ have their k outputs connected individually to k parallel optical fibres 32 which form a fibre back plane. The output modules $15_1$-$15_n$ and $16_1$-$16_n$ have their respective k inputs selectively connected to the k fibres of the back plane. This arrangement is particularly suited to use with input modules of the form shown in Figure 5 since individual signal trains can be programmably applied to individual ones of the back plane fibres 32 and then selectively received by the output modules 15, 16 under the control of tunable filters 23, 27. This arrangement has the advantage that the individual modules can be arranged as units that can be plugged onto the back plane for example by using optical D-couplers.

The described examples of the invention have the advantage that the number of elements that need to be controlled is much smaller as compared with the configuration shown in Figure 1. Considering an example of the OXC of Figure 2, when compared with that of Figure 1, when the number of wavelengths k = 4 and the number of input and output optical lines is 3, the component count is set out in the following table:

TABLE

|  | Fig. 1 | Fig. 2 |
|---|---|---|
| Number of tunable filters | 12 | 16 |
| Number of tunable sources | 4 | 4 |
| Number of crosspoints | 112 | - |
| Number of wavelength converters | - | 24 |
| Total | 128 | 44 |

Furthermore, since the wavelength converters in the input modules can be permanently set such that the output wavelength of a converter is always the same, the number of elements requiring control can be reduced to 36.

The optical star couplers of Figure 2 and the back plane bus of Figure 6 are inexpensive components as compared with the space switches shown in Figure 1. Packaged optical star couplers which are wavelength insensitive between 1300-1600 nm and as large as 144 x 144 have been reported and are thus suited to implement the invention. Since the optical star couplers are themselves inexpensive compared to the input and output modules shown in Figure 2, it is envisaged that not all the input and output modules need be attached at the time of commissioning the system so that the system can readily be upgraded in terms of its capacity thereafter. The described input and output modules both include wavelength converters, with the advantage that if a signal inversion occurs at the wavelength converter, two inversions occur, so that no signal inversion will occur in the final output of the cross-connect.

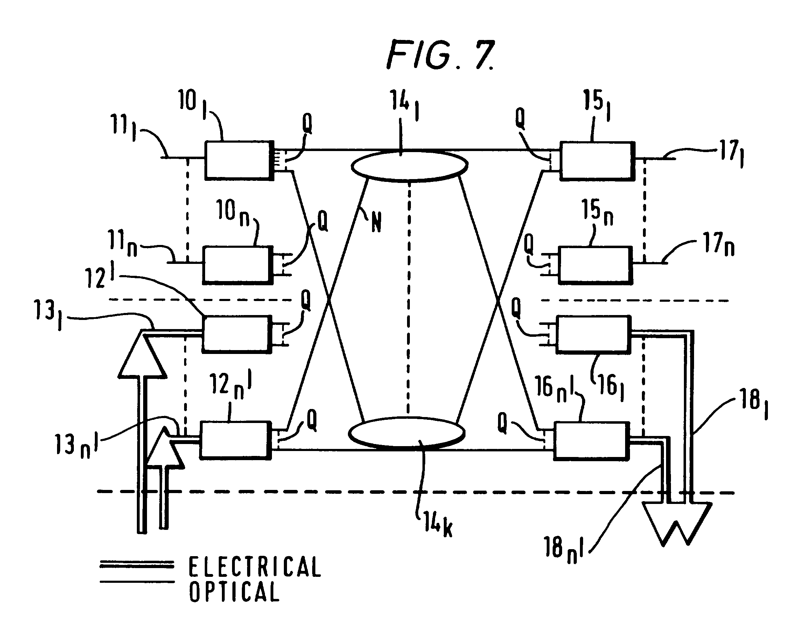

An embodiment of the invention will now be described in which an alternative way of avoiding channel blocking is achieved. Referring to Figure 7, the structure is generally similar to that shown in Figure 2 and like parts are given the same reference numbers. Each of the input optical fibres 11 carries k optical multiplex channels, but each input module 10, instead of providing k parallel channels, provides Q channels where:

$$Q > 2k - 1 \qquad (1)$$

Similarly, the input modules 12 provide Q parallel channels and Q star couplers 14 are provided. Each of the output modules 15, 16 is provided with Q parallel channels.

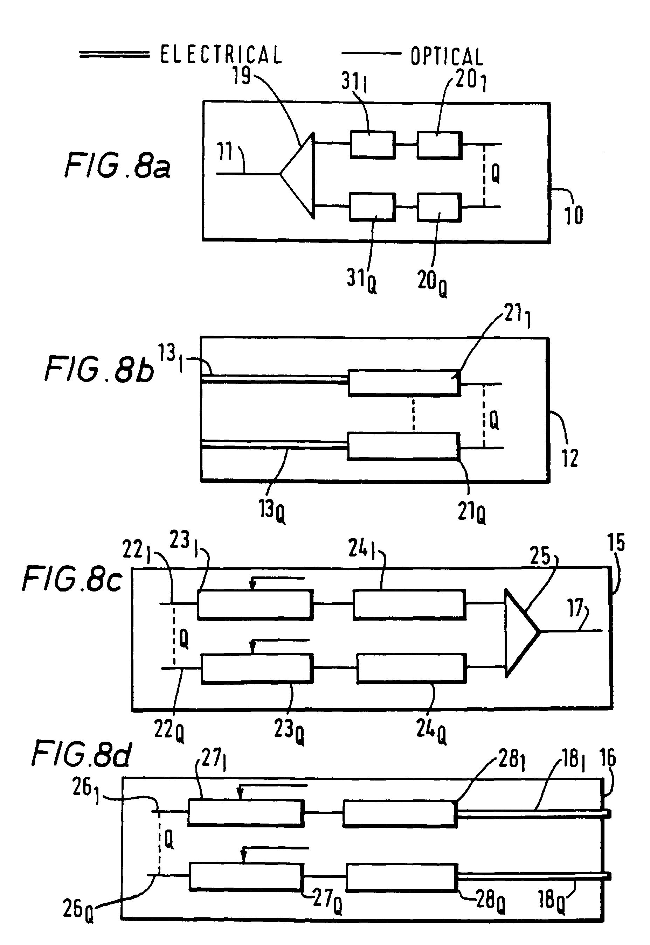

The various input and output modules 10, 12, 15 and 16 are shown in more detail in Figures 8a - d respectively. Referring to Figure 8a, each input module 10 is similar to that shown in Figure 5 but with Q channels, and consists of an input fibre 11 that carries k input multiplexed channels, connected to a passive splitter 19 that has Q outputs coupled to Q tunable filters $31_1 - 31_Q$ which are respectively connected to wavelength converters $20_1 - 20_Q$, in order to provide Q parallel outputs. From the foregoing, it will be seen that the channel redundancy of (Q - k) and the tunable nature of the various channels Q allows a strictly non-blocking configuration to be provided.

Referring now to Figure 8b which shows the input module 12, the arrangement has Q input channels connected to respective tunable lasers $21_1 - 21_Q$. For a system which provides k input channels, the remaining input channels (Q - k) can be used to provide test signals. The configuration of the output modules 15, 16 shown in Figures 8c, d is the same as that shown in Figures 3c, d except for the provision of Q parallel channels rather than k. It will be seen that by appropriate selection of the wavelength of operation of tunable filters 31 and 23, 27, a fully non-blocking architecture is provided by virtue of the (Q - k) channel redundancy. Whilst this non-blocking arrangement has been described for use with the star couplers 14, it will be appreciated that it can also be used in connection with a back plane bus as shown in Figure 6, but utilising Q back plane channels. Thus the various modules of Figure 8, could be used with a Q channel back plane bus.

Since the wavelengths used in the cross-connect according to the invention are selected independently of the wavelengths used in the optical network itself, it is not necessary to control the preciseness of wavelength throughout the entire network but only on a link-by-link basis, since each optical cross-connect in accordance with the invention provides a decoupling between adjacent sections of the network.

Also, the separation of the N wavelengths used in the optical cross-connect need not be the same as the separation of the wavelengths $\lambda_1$-$\lambda_k$ used on the link. For example, the link wavelengths $\lambda_1$-$\lambda_k$ may each be separated by 2 nm whereas the wavelengths $\lambda_i$, $\lambda_n$ can be separated by 1nm, 2nm, 3nm or any other suitable spacing.

Thus, the set of wavelengths used in the optical cross-connect is independent of the network and the number of trunk lines and the number of channels k used in the network itself. Thus, N can be chosen independently of k.

**Claims**

1. An optical cross-connect comprising:

   a plurality of input means (10, 12) each for receiving a respective group of input signals (11, 13) and deriving in response to each signal of the group an individual optical signal ($\lambda_i$) of a respective given wavelength, a plurality of output means (15, 16) each including a plurality of receptors (23, 27) selectively responsive to respective ones of the wavelengths of said optical signals to provide an output signal for the output means, and a plurality of coupling means (14, 32) each for coupling a respective one of said optical signals, each of a different wavelength, from each of the input means, to a respective receptor of each of the output means
   **characterised in that**
   the input means (10, 12) are arranged in a plurality (N) of modules each for receiving a group (k) of said input signals,
   said output means (15, 16) are arranged in a plurality of modules, and
   said modules are selectively connectible to the coupling means.

2. An optical cross-connect according to claim 1 wherein said input signals comprise multiplexed optical signals and at least some of said input means (10) include means responsive to the multiplexed optical signals to produce said individual optical signals of respective given wavelengths.

3. An optical cross-connect according to claim 2 wherein said multiplexed optical signals comprise WDM signals.

4. An optical cross-connect according to claim 3 wherein the input means comprises a WDM demultiplexer (19) for demultiplexing the input WDM signals, and a plurality of wavelength converters (20) responsive respectively to the demultiplexed signals for producing said individual optical signals.

5. An optical cross-connect according to claim 3 including means (30, 31) for selectively controlling which of said individual optical signals from the respective input means are coupled to a particular one of the coupling means.

6. An optical cross-connect according to claim 5 wherein at least some of said input means includes beam splitting means (30) for splitting the input optical signals into a plurality of paths, and tunable filters (31) associated with the paths for selecting the individual WDM signals respectively.

7. An optical cross-connect according to claim 6 including wavelength converters (20) connected to the outputs of the tunable filters (31) respectively.

8. An optical cross-connect according to any one of claims 2 to 6 wherein at least some of the output means include a respective means (25) for combining the outputs of the receptors to provide the output signal.

9. An optical cross-connect according to claim 8 including wavelength converters (24) connected to the outputs of the outputs of the receptors (23).

10. An optical cross-connect according to any preceding claim wherein at least one group of said input signals comprise electrical signals and the input means (12) that receives the electrical signals includes a plurality of tunable lasers (21) operative to generate corresponding optical signals at said different wavelengths.

11. An optical cross-connect according to any preceding claim wherein at least one of the output means includes photodetectors (28) connected to the receptors (27) thereof for producing a plurality of output electrical signals.

12. An optical cross-connect according to any preceding claim wherein the receptors comprise tunable filters.

13. An optical cross-connect according to any preceding claim wherein said plurality of coupling means comprises a plurality of star couplers (14).

14. An optical cross-connect according to any preceding claim wherein said plurality of coupling means comprises a plurality of bus lines (32), with the optical signals of different wavelength from each input means being coupled to the bus lines, and the receptors of each output means being coupled to the bus lines.

15. An optical cross-connect according to claim 14 wherein said modules of said input means and said output means (10, 12, 15, 16) are selectively addable to and removable from connection from the bus lines.

16. An optical cross-connect according to any preceding claim wherein the wavelengths of the individual optical signals are selectable independently of the wavelengths of the input signals.

17. An optical cross-connect according to any preceding claim wherein a plurality of the input means (10,12) are each operative to receive a respective group (k) of input signals and derive in response to each signal of the group an individual optical signal of a respective given wavelength the individual output signals being provided on selected ones of a plurality of output channels greater than k, a plurality of the output means (15, 16) each including a plurality of receptors greater in number than k, are selectively responsive to respective ones of the wavelengths of said optical signals to provide an output signal for the output means, and a plurality of the coupling means (14, 32) greater in number than k, are each operative to couple a respective one of said optical signals, each of a different wavelength, from each of the input means, to a respective receptor of each of the output means.

18. An optical cross-connect according to claim 17 wherein the input means (10, 12) each include Q channels where $Q > 2k - 1$.

19. An optical cross-connect according to claim 18 including Q of said coupling means (14, 32).

20. An optical cross-connect according to claim 17 or 18 including Q of said receptors (23, 27) for each of said output means (15, 16).

**Patentansprüche**

1. Optisches Querverbindungssystem mit:

mehreren Eingangsvorrichtungen (10, 12) jeweils zum Empfangen einer jeweiligen Gruppe von Eingangssignalen (11, 13) und zum Ableiten eines individuellen optischen Signals ($\lambda_i$) einer jeweiligen gegebenen Wellenlänge zu jedem Signal der Gruppe,

mehreren Ausgangsvorrichtungen (15, 16), die jeweils mehrere Empfänger (23, 27) selektiv zu den jeweiligen Wellenlängen der optischen Signale umfassen, um ein Ausgangssignal für die Ausgangsvorrichtung zu erzeugen, und mehreren Kopplervorrichtungen (14, 32) jeweils für das Koppeln eines jeweiligen optischen Signals mit jeweils unterschiedlicher Wellenlänge von jeder der Eingangsvorrichtungen mit einem jeweiligen Empfänger jeder der Ausgangsvorrichtungen,

dadurch gekennzeichnet, daß

die Eingangsvorrichtungen (10, 12) in mehreren (N) Modulen jeweils zum Empfangen einer Gruppe (k) von Eingangssignalen angeordnet sind,

die Ausgangsvorrichtungen (15, 16) in mehreren Modulen angeordnet sind und

die Module selektiv mit den Kopplervorrichtungen verbunden werden können.

2.  Optische Querverbindungsvorrichtung nach Anspruch 1, bei der die Eingangssignale gemultiplexte optische Signale umfassen und wenigstens einige der Eingangsvorrichtungen (10) Vorrichtungen für die gemultiplexten optischen Signale, um die individuellen optischen Signale der jeweils gegebenen Wellenlängen zu erzeugen.

3.  Optische Querverbindungsvorrichtung nach Anspruch 2, bei der die gemultiplexten optischen Signale WDM-Signale umfassen.

4.  Optische Querverbindungsvorrichtung nach Anspruch 3, bei der die Eingangsvorrichtung einen WDM-Demultiplexer (19) zum Demultiplexen der WDM-Eingangssignale und mehrere Wellenlängenkonverter (20) für die jeweiligen gedemultiplexten Signalen zum Erzeugen der individuellen optischen Signale umfaßt.

5.  Optische Querverbindungsvorrichtung nach Anspruch 3 mit einer Vorrichtung (30, 31) zum selektiven Steuern, welches der individuellen optischen Signale von der jeweiligen Eingangsvorrichtung zu einer speziellen der Kopplervorrichtungen durchgeschaltet wird.

6.  Optische Querverbindungsvorrichtung nach Anspruch 5, bei der wenigstens einige der Eingangsvorrichtungen eine Strahlteilervorrichtung (30) zum Aufteilen des optischen Eingangssignals auf mehrere Pfade und abstimmbare Filter (31) zu den Pfaden zum Auswählen der jeweiligen individuellen WDM-Signale umfassen.

7.  Optische Querverbindungsvorrichtung nach Anspruch 6 mit Wellenlängenkonvertern (20), die jeweils mit den Ausgängen der abstimmbaren Filter (31) verbunden sind.

8.  Optische Querverbindungsvorrichtung nach einem der Ansprüche 2 bis 6, bei der wenigstens einige der Ausgangsvorrichtungen eine jeweilige Vorrichtung (25) zum Überlagern der Ausgänge der Empfänger zum Erzeugen des Ausgangssignals umfassen.

9.  Optische Querverbindungsvorrichtung nach Anspruch 8 mit Wellenlängenkonvertern (24), die mit den Ausgängen der Ausgänge der Empfänger (23) verbunden sind.

10. Optische Querverbindungsvorrichtung nach einem der vorangehenden Ansprüche, bei der wenigstens eine Gruppe von Eingangssignalen elektrische Signale umfaßt und die Eingangsvorrichtung (12), die die elektrischen Signale empfängt, mehrere abstimmbare Laser (21) umfaßt, die dazu dienen, entsprechende optische Signale bei den unterschiedlichen Wellenlängen zu erzeugen.

11. Optische Querverbindungsvorrichtung nach einem der vorangehenden Ansprüche, bei der wenigstens eine der Ausgangsvorrichtungen Photodetektoren (28) umfaßt, die mit den Empfängern (27) davon zum Erzeugen von mehreren elektrischen Ausgangssignalen verbunden sind.

12. Optische Querverbindungsvorrichtung nach einem der vorangehenden Ansprüche, bei der die Empfänger abstimmbare Filter umfassen.

13. Optische Querverbindungsvorrichtung nach einem der vorangehenden Ansprüche, bei der die mehreren Kopplervorrichtungen mehrere Sternkoppler (14) umfassen.

**14.** Optische Querverbindungsvorrichtung nach einem der vorangehenden Ansprüche, bei der mehrere Kopplervorrichtungen mehrere Busleitungen (32) umfassen, wobei die optischen Signale unterschiedlicher Wellenlänge von jeder Eingangsvorrichtung mit den Busleitungen gekoppelt sind und die Empfänger jeder Ausgangsvorrichtung mit den Busleitungen gekoppelt sind.

**15.** Optische Querverbindungsvorrichtung nach Anspruch 14, bei der die Module der Eingangsvorrichtung und Ausgangsvorrichtung (10, 12, 15, 16) selektiv hinzugefügt werden können zu und entfernt werden können von der Verbindung mit den Busleitungen.

**16.** Optische Querverbindungsvorrichtung nach einem der vorangehenden Ansprüche, bei der die Wellenlängen der individuellen optischen Signale unabhängig von den Wellenlängen der Eingangssignale auswählbar sind.

**17.** Optische Querverbindungsvorrichtung nach einem der vorangehenden Ansprüche, bei der mehrere Eingangsvorrichtungen (10, 12) jeweils dazu dienen, eine jeweilige Gruppe (k) von Eingangssignalen zu empfangen und in Abhängigkeit von jedem Signal der Gruppe ein individuelles optisches Signal einer jeweiligen gegebenen Wellenlänge zu erzeugen, wobei die individuellen Ausgangssignale auf ausgewählten von mehr als k Ausgangskanälen erzeugt werden, wobei mehrere der Ausgangsvorrichtungen (15, 16) jeweils mehr als k Empfänger umfassen und selektiv auf die jeweiligen Wellenlängen der optischen Signale reagieren, um ein Ausgangssignal für die Ausgangsvorrichtungen zu erzeugen, und mehr als k der Kopplervorrichtungen (14, 32) jeweils dazu dienen, ein entsprechendes der optischen Signale, die jeweils unterschiedliche Wellenlängen haben, von jeder der Eingangsvorrichtungen mit einem jeweiligen Empfänger jeder der Ausgangsvorrichtungen zu koppeln.

**18.** Optische Querverbindungsvorrichtung nach Anspruch 17, bei der die Eingangsvorrichtungen (10, 12) jeweils Q Kanäle umfassen, wobei Q > 2 k - 1 ist.

**19.** Optische Querverbindungsvorrichtung nach Anspruch 18 mit Q Kopplervorrichtungen (14, 32).

**20.** Optische Querverbindungsvorrichtung nach Anspruch 17 oder 18 mit Q Empfängern (23, 27) für jede der Ausgangsvorrichtungen (15, 16).

## Revendications

**1.** Interconnexion optique comprenant :

un certain nombre de moyens d'entrée (10, 12) chacun étant destiné à recevoir un groupe respectif de signaux d'entrée (11, 13) et à obtenir en réponse à chaque signal du groupe un signal optique individuel ($\lambda_i$) d'une longueur d'onde donnée respective,
un certain nombre de moyens de sortie (15, 16) comprenant chacun un certain nombre de récepteurs (23, 27) sélectivement sensibles à des longueurs d'onde respectives parmi les longueurs d'onde desdits signaux optiques afin de fournir un signal de sortie pour les moyens de sortie, et
un certain nombre de moyens de couplage (14, 32) chacun étant destiné à coupler un signal respectif parmi lesdits signaux optiques, chacun d'une longueur d'onde différente, à partir de chacun des moyens d'entrée, à un récepteur respectif de chacun des moyens de sortie,
caractérisée en ce que
les moyens d'entrée (10, 12) sont agencés suivant un certain nombre (N) de modules, chacun étant destiné à recevoir un groupe (k) desdits signaux d'entrée,
lesdits moyens de sortie (15, 16) sont agencés en un certain nombre de modules, et
lesdits modules peuvent être connectés sélectivement aux moyens de couplage.

**2.** Interconnexion optique selon la revendication 1, dans laquelle lesdits signaux d'entrée comprennent des signaux optiques multiplexés et au moins certains desdits moyens d'entrée (10) comprennent des moyens répondant aux signaux optiques multiplexés afin de produire lesdits signaux optiques individuels de longueurs d'onde données respectives.

**3.** Interconnexion optique selon la revendication 2, dans laquelle lesdits signaux optiques multiplexés comprennent des signaux multiplexés par répartition en longueur d'onde WDM.

**4.** Interconnexion optique selon la revendication 3, dans laquelle les moyens d'entrée comprennent un démultiplexeur de multiplexage WDM (19) destiné à démultiplexer les signaux multiplexés WDM d'entrée, et un certain nombre de convertisseurs de longueur d'onde (20) répondant respectivement aux signaux démultiplexés afin de produire lesdits signaux optiques individuels.

5. Interconnexion optique selon la revendication 3, comprenant des moyens (30, 31) destinés à commander sélectivement lesquels desdits signaux optiques individuels provenant des moyens d'entrée respectifs sont couplés à un moyen particulier parmi les moyens de couplage.

6. Interconnexion optique selon la revendication 5, dans laquelle au moins certains desdits moyens d'entrée comprennent un moyen de séparation de faisceau (30) destiné à séparer les signaux optiques d'entrée en un certain nombre de voies, et des filtres accordables (31) associés aux voies afin de sélectionner les signaux multiplexés WDM individuels, respectivement.

7. Interconnexion optique selon la revendication 6, comprenant des convertisseurs de longueur d'onde (20) reliés aux sorties des filtres accordables (31), respectivement.

8. Interconnexion optique selon l'une quelconque des revendications 2 à 6, dans laquelle au moins certains des moyens de sortie comprennent un moyen respectif (25) destiné à combiner les sorties des récepteurs afin de fournir le signal de sortie.

9. Interconnexion optique selon la revendication 8, comprenant des convertisseurs de longueur d'onde (24) reliés aux sorties des sorties des récepteurs (23).

10. Interconnexion optique selon l'une quelconque des revendications précédentes, dans laquelle au moins un groupe desdits signaux d'entrée comprend des signaux électriques et le moyen d'entrée (12) qui reçoit les signaux électriques comprend un certain nombre de lasers accordables (21) agissant pour générer des signaux optiques correspondants auxdites différentes longueurs d'onde.

11. Interconnexion optique selon l'une quelconque des revendications précédentes, dans laquelle au moins l'un des moyens de sortie comprend des photodétecteurs (28) reliés aux récepteurs (27) de ceux-ci afin de produire un certain nombre de signaux électriques de sortie.

12. Interconnexion optique selon l'une quelconque des revendications précédentes, dans laquelle les récepteurs comprennent des filtres accordables.

13. Interconnexion optique selon l'une quelconque des revendications précédentes, dans laquelle ledit certain nombre de moyens de couplage comprend un certain nombre de coupleurs en étoile (14).

14. Interconnexion optique selon l'une quelconque des revendications précédentes, dans laquelle ledit certain nombre de moyens de couplage comprend un certain nombre de lignes de bus (32), les signaux optiques de différentes longueurs d'onde provenant de chaque moyen d'entrée étant couplés aux lignes de bus, et les récepteurs de chaque moyen de sortie étant couplés aux lignes de bus.

15. Interconnexion optique selon la revendication 14, dans laquelle lesdits modules desdits moyens d'entrée et desdits moyens de sortie (10, 12, 15, 16) peuvent être ajoutés sélectivement et être enlevés d'une connexion des lignes de bus.

16. Interconnexion optique selon l'une quelconque des revendications précédentes, dans laquelle les longueurs d'onde des signaux optiques individuels peuvent être sélectionnées indépendamment des longueurs d'onde des signaux d'entrée.

17. Interconnexion optique selon l'une quelconque des revendications précédentes, dans laquelle un certain nombre de moyens d'entrée (10, 12) peut fonctionner individuellement pour recevoir un groupe respectif (k) de signaux d'entrée et obtenir en réponse à chaque signal du groupe un signal optique individuel d'une longueur d'onde donnée respective, les signaux de sortie individuels étant fournis sur des canaux sélectionnés parmi un certain nombre de canaux de sortie, supérieur à k, un certain nombre de moyens de sortie (15, 16) comprenant chacun un certain nombre de récepteurs supérieur en nombre à k, sont sélectivement sensibles à des longueurs d'onde respectives parmi les longueurs d'onde desdits signaux optiques afin de fournir un signal de sortie pour les moyens de sortie, et un certain nombre des moyens de couplage (14, 32) supérieur en nombre à k, agisse chacun pour coupler un signal respectif parmi lesdits signaux optiques, chacun d'une longueur d'onde différente, à partir de chacun des moyens d'entrée, à un récepteur respectif de chacun des moyens de sortie.

18. Interconnexion optique selon la revendication 17, dans laquelle les moyens d'entrée (10, 12) comprennent chacun Q canaux où Q> 2k - 1 .

19. Interconnexion optique selon la revendication 18, comprenant Q desdits moyens de couplage (14, 32).

20. Interconnexion optique selon la revendication 17 ou 18, comprenant Q desdits récepteurs (23, 27) pour chacun desdits moyens de sortie (15, 16).

FIG.1
(PRIOR ART)

EP 0 733 298 B1

# FIG. 2

ELECTRICAL
OPTICAL

EP 0 733 298 B1

FIG.3a

FIG.3b

FIG.3c

FIG.3d

FIG. 4

FIG. 5

# FIG.6

INPUT MODULE | OUTPUT MODULE

$10_l$  $10_n$  $12_l$  $12_{nl}$  $15_l$  $15_n$  $16_l$  $16_{nl}$

32

l

k

k

ELECTRICAL
OPTICAL

EP 0 733 298 B1

FIG. 7.

══════ ELECTRICAL ─────── OPTICAL

*FIG.8a*

*FIG.8b*

*FIG.8c*

*FIG.8d*